# EUROPÄISCHE PATENTSCHRIFT

(11) **EP 1 690 992 B1**
(45) Veröffentlichungstag und Bekanntmachung des Hinweises auf die Patenterteilung: **06.05.2009**
(21) Anmeldenummer: 06001802.5
(22) Anmeldetag: 30.01.2006
(51) Int. Cl.: E04B 1/41, F16B 43/00, F16B 33/00

(54) **Befestigungs-Anker sowie Verwendung desselben**
Fastening anchor and use of same
Ancre d'attache et son utilisation

(30) Priorität: 10.02.2005 DE 102005006279; 04.05.2005 DE 102005020795
(43) Veröffentlichungstag der Anmeldung: 16.08.2006
(73) Patentinhaber: TOGE-Dübel A. Gerhard KG, 90431 Nürnberg (DE)
(72) Erfinder: Gerhard, Andreas, 90427 Nürnberg (DE)
(74) Vertreter: Rau, Albrecht

(56) Entgegenhaltungen:
- DE-A1- 19 856 512
- DE-U1- 20 012 142
- DE-U1- 20 208 960

## Beschreibung

Die Erfindung betrifft einen Befestigungs-Anker zum Einschrauben in ein Bohrloch, vorzugsweise in Beton sowie ein Verfahren, bei dem der Befestigungs-Anker verwendet wird.

Beton-Autobrücken weisen einen Grundkörper aus Beton auf, auf dem mittig Fahrbahnen angeordnet sind. Die seitlichen Ränder sind durch eine im Querschnitt L-förmigen Kappe aus Beton geschützt. Die Kappe ist von dem Grundkörper durch eine Isolierschicht aus Bitumen getrennt. Bei Brückenrenovierungsarbeiten wird diese Kappe entfernt und unter anderem die Isolierschicht erneuert. Anschließend wird durch Ortbeton eine neue Kappe gegossen, die gegenüber dem Brücken-Grundkörper befestigt werden muss. Die hierbei verwendeten Verfahren haben den Nachteil, dass sie sehr aufwändig sind und häufig die Isolierschicht verletzen, so dass gegebenenfalls salzhaltiges Wasser, in dem Abgase gelöst sind, in den Beton eindringen kann.

Aus der DE 200 12 142 U1 ist ein Verankerungsstab zur Befestigung eines Fertigbauteils im Straßenbelag bekannt.
Aus der DE-A-198 56 512 ist der Stand der Technik gemäß Oberbegriff des Anspruchs 1 bekannt.

Der Erfindung liegt die Aufgabe zugrunde, einen Befestigungs-Anker zu schaffen, der diese Nachteile überwindet.

Die Aufgabe wird durch die Merkmale der Ansprüche 1 und 10 gelöst.

Der Kern der Erfindung besteht darin, einen als Betonschraube ausgebildeten Befestigungs-Anker zu schaffen, auf dem eine Abdichtungs-Scheibe mit Reibsitz angeordnet ist, welche der Bohrlochabdichtung dient.

Weitere vorteilhafte Ausgestaltungen der Erfindung ergeben sich aus den Unteransprüchen.

Zusätzliche Merkmale und Einzelheiten der Erfindung ergeben sich aus der Beschreibung zweier Ausführungsbeispiele anhand der Zeichnung. Es zeigen
- Fig. 1: einen Querschnitt eines verbauten Befestigungs-Ankers gemäß einem ersten Ausführungsbeispiel,
- Fig. 2: einen Querschnitt eines Teils einer Brücke mit Befestigungs-Ankern gemäß Fig. 1,
- Fig. 3: einen Querschnitt eines unverbauten Befestigungs-Ankers gemäß einem zweiten Ausführungsbeispiel, und
- Fig. 4: einen Querschnitt des Befestigungs-Ankers gemäß Fig. 3 in verbautem Zustand.

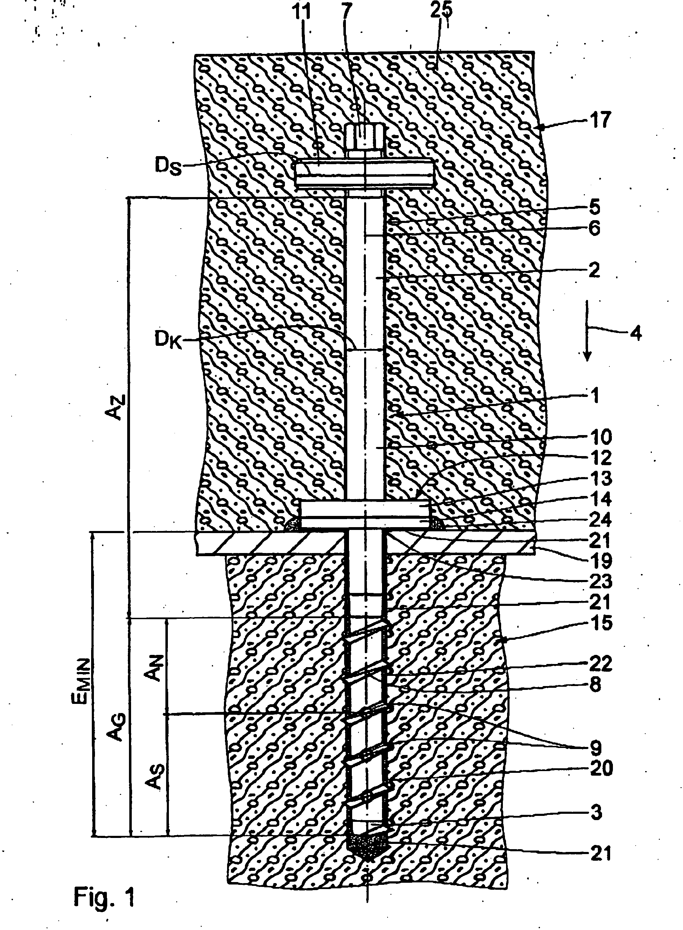

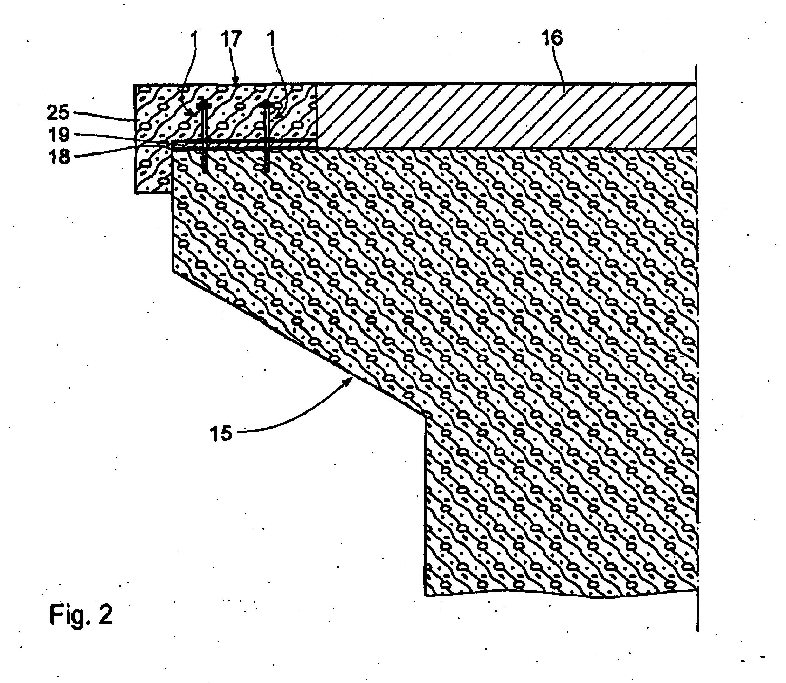

Im Folgenden wird unter Bezugnahme auf die Fig. 1 und 2 ein erstes Ausführungsbeispiel der Erfindung beschrieben. Hierfür wird zunächst unter Bezugnahme auf Fig. 1 der Aufbau eines erfindungsgemäßen Befestigungs-Ankers 1 im Ausgangszustand, das heißt vor dem Einschrauben, beschrieben. Der Anker 1 ist zum Einschrauben in einen harten, porösen Werkstoff, insbesondere Beton, bestimmt und hinsichtlich des Materials entsprechend dimensioniert. Der Anker 1 weist einen im Wesentlichen zylindrischen Kern 2 mit einem Einführende 3, einer Einschraub-Längsrichtung 4, einem Außenumfang 5 und einer parallel zur Längsrichtung 4 verlaufenden Mitel-Längs-Achse 6 auf. An dem dem Einftihrende 3 abgewandten Ende des Kerns 2 ist ein beliebig auszubildender Anker-Kopf 7 vorgesehen, der als Außen-Sechskant ausgebildet ist und in radialer Richtung gegenüber dem Kern 2 nicht hervorsteht.

Einstückig mit dem Kern 2 ist ein Gewinde 8 ausgebildet, das sich vom Einfiihrende 3 entlang eines Gewinde-Abschnitts der Länge A_{G} erstreckt. Das Gewinde 8 ist entlang eines sich vom Einführende 3 entgegen der Einschraub-Längsrichtung 4 erstreckenden Schneid-Abschnitts der Länge A_{S} selbstschneidend und weist hierfür im Gewinde 8 Schneid-Elemente 9 auf. Es gilt: A_{S} < A_{G}. An den Schneid-Abschnitt A_{S} schließt sich ein Normal-Gewinde-Abschnitt der Länge AN an, wobei gilt: A_{S} + AN = A_{G}. Die nähere Ausgestaltung eines entsprechenden Gewindes 8 ist aus der DE 198 56 512 A1 bekannt. An den Gewinde-Abschnitt A_{G} schließt sich ein Zylinder-Abschnitt 10 mit glatter Oberfläche und kreisförmigem Querschnitt an. Dieser weist eine Länge A_{z} auf. In Längsrichtung 3 unmittelbar hinter dem Anker-Kopf 7 liegend ist eine Halte-Scheibe 11 auf den Kern 2 drehgesichert aufgeschraubt. Für das Verhältnis des Durchmessers D_{S} der Scheibe 11 zum Durchmesser D_{K} des Kernes 2 gilt: D_{S}/D_{K} ≥ 2,0 insbesondere D_{S}/D_{K} ≥ 2,5, insbesondere D_{S}/D_{K} ≥ 3,5. Es ist auch möglich, andere am Kern 2 befestigte, gegenüber diesem radial vorspringende HalteElemente, wie zum Beispiel Querstreben, vorzusehen. Die Dicke der Scheibe 11 liegt bevorzugt zwischen 50 % und 100 % des Durchmessers D_{K} des Kernes 2. Die Scheibe 11 kann auch mit dem Kern 2 stoffschlüssig verbunden sein.

Zwischen der Scheibe 11 und dem dem Einführende 3 abgewandten Ende des Gewinde-Abschnitts A_{G} ist auf dem Zylinder-Abschnitts 10 des Kerns 2 eine Abdichtungs-Scheibe 12 angeordnet. Die Scheibe 12 ist mit Reibsitz beziehungsweise Presssitz auf dem Kern 2 angeordnet, das heißt bei kleineren entlang der Achse 6 wirkenden Kräfte unverschieblich und bei größeren entlang der Achse 6 wirkenden Kräfte gegen eine entsprechende Gegenkraft auf dem Kern 2 verschieblich. Die Scheibe 12 besteht aus einer dem Einführende 3 abgewandten Stütz-Scheibe 13, die beispielsweise aus Hart-PVC besteht, sowie einer dem Einführende 3 zugewandten, parallel zur Scheibe 13 angeordneten, an dieser anliegenden Dicht-Scheibe 14, welche beispielsweise aus einem flexiblen, bituminösen Material besteht. Die Scheiben 13 und 14 können auch einteilig miteinander ausgebildet sein. Im Ausgangszustand, das heißt vor dem Einschrauben des Ankers 1, ist die Scheibe 12 relativ nah dem Ende des Gewindes 8 auf dem Zylinder-Abschnitt 10 angeordnet, das heißt dem Einführende 3 näher, als in Fig. 1 dargestellt. Der Anker 1 besteht aus einer hoch korrosionsfesten Metalllegierung. Beispielsweise wird eine Chrom-Nickel-Legierung mit einem Anteil von 45 % Chrom und 29 % Nickel verwendet. Es können selbstverständlich auch weniger korrosionsbeständige Stähle verwendet werden.

Im Folgenden wird die Anordnung des Ankers 1 in einem Bauwerk sowie das Verfahren zu dessen Anbringung beschrieben. Autobrücken weisen einen gegenüber dem Boden abgestützten, in Fig. 2 nur hälftig dargestellten Betongrundkörper 15 auf, der im Folgenden als Betonteil 15 bezeichnet wird. Auf diesem sind mittig eine oder mehrere Fahrbahnen 16 für Fahrzeuge angeordnet. Der Randbereich ist von einer im Querschnitt L-förmigen Kappe 17 umgeben, die über die Kante 18 des Betonteils 15 nach unten ragt und diese umschließt. Zwischen der Kappe 17 und dem Betonteil 15 ist eine elastische Isolier-Schicht 19 angeordnet, die in der Regd aus mehreren Lagen eines bituminösen Materials besteht. Bei dem Neubau einer Brücke ist die Kappe 17 bereits wie oben beschrieben angeordnet und befestigt. Kommt es zu Sanierungsarbeiten, so wird die Kappe 17 entfernt und hierbei zerstört. Anschließend werden entsprechende Sanierungsarbeiten am Betonteil 15 vorgenommen und die Isolier-Schicht 19 gegebenenfalls erneuert. Bis zu diesem Zeitpunkt befinden sich noch keine Anker 1 im Einsatz. Hier setzt das erfindungsgemäße Verfahren ein.

In das Betonteil 15 werden Bohrlöcher 20 gebohrt, wobei der Durchmesser jedes Bohrlochs 20 kleiner ist als der Außendurchmesser des Gewindes 8, so dass sichergestellt ist, dass sich das Gewinde 8 beim Einschrauben in das Bohrloch 20 in dessen Wand einschneidet. Nach dem Bohren des Bohrloches 20 wird eine selbstaushärtende Verbundmasse 21, das heißt ein zumindest schwach fließfähiger Klebstoff, in das Bohrloch 20 eingebracht. Die Verbundmasse 21 ist vorzugsweise so gewählt, dass sie sich während des Aushärtvorganges erwärmt, insbesondere auf mehr als 40 °C, insbesondere mehr als 60 °C, insbesondere mehr als 75°C erwärmt. Anschließend wird der Anker 1 mit einem auf den Anker-Kopf 7 aufgesetzten Schraubgerät in das Bohrloch 20 eingedreht, wobei die Schneid-Elemente 9 sich in die Wand des Bohrloches 20 einschneiden und das Gewinde 8 teilweise in der Wand des Bohrloches 20 zu liegen kommt. Der Durchmesser des Bohrloches 20 ist so gewählt, dass zwischen der Wand des Bohrloches 20 und dem Kern 2 entlang des Gewinde-Abschnitts A_{G} ein ringförmiger Spalt 22 mit einer Breite von beispielsweise 0,4 mm bis 0,7 mm verbleibt. Durch das Einschrauben des Ankers 1 wird die Verbundmasse 21 unter Druck gesetzt und gelangt zum einen in den das Bohrloch 20 umgebenden Beton und verfestigt diesen nach dem Aushärten. Darüber hinaus wird die Verbundmasse 21 durch den Spalt 22 nach außen in den Bereich des Bohrloch-Randes 23 gedrückt und tritt dort seitlich aus.

Während des Einschraubens des Ankers 1 passiert mit der Abdichtungs-Scheibe 12 folgendes: Wie eingangs erläutert, beendet sich die Scheibe 12 vor dem Einschrauben in einem Abstand A_{S} vom Einführende 3 der kleiner ist als die für den Anker 1 vorgesehene minimale Einschraubtiefe E_{MIN}. Dies bedeutet, dass während des Einschraubvorgangs die Scheibe 12 bald auf dem Bohrloch-Rand 23 zu liegen kommt und dann bei fortgesetztem Einschrauben auf dem Kern 2 entgegen der Richtung 4 verschoben wird.

Durch den starken Reibsitz zwischen Scheibe 12 und Kern 2 ist sichergestellt, dass die Scheibe 12 während des Einschraubvorgangs dicht an dem Rand 23 anliegt und gegen diesen drückt. Die Verbundmasse 21 wird während des fortgesetzten Einschraubens über den Bohrloch-Rand 23 durch den ringförmigen Raum zwischen Rand 23 und Scheibe 12 nach außen gedrückt und bildet außerhalb der Scheibe 12 eine diese umgebende Wulst 24. Da sich die Verbundmasse 21 während des Aushärtevorgangs erhitzt, wird die Oberfläche der bituminösen Isolierschicht 19 und die Oberfläche der bituminösen Dicht-Scheibe 14 angeschmolzen, so dass beide teilweise miteinander verschmelzen und verkleben. Es kommt dadurch zu einer vollkommenen im Wesentlichen wasser- und gasdichten Versiegelung des Bohrlochs 20 in dem Betonteil 15, so dass korrosives Wasser oder korrosive Gase nicht eindringen können. Dadurch, dass die Scheibe 14 und die Isolierschicht 19 elastisch sind, können auch Temperaturschwankungen aufgenommen werden, ohne dass die Bohrloch-Abdichtung beeinträchtigt wird. Nach dem Aushärten der Verbundmasse 21 wird Ortbeton in eine entsprechende, die Anker 1 umgebende Schalung gegossen, so dass eine Kappe 17 der in Fig. 2 dargestellten Form entsteht. Das entstehende Ortbetonteil 25 umschließt vollständig die Halte-Scheibe 11 und auch den Anker-Kopf 7. Die Scheibe 11 dient primär der Halterung des Ortbetonteils 25 am Anker 1.

Die Vorteile des beschriebenen Verfahrens sind zahlreich. Der Anker 1 ist vergleichsweise einfach herzustellen. Die Befestigung des Ankers 1 ist schnell und einfach. Die erzielte Bohrlochabdichtung ist sehr gut und temperaturbeständig.

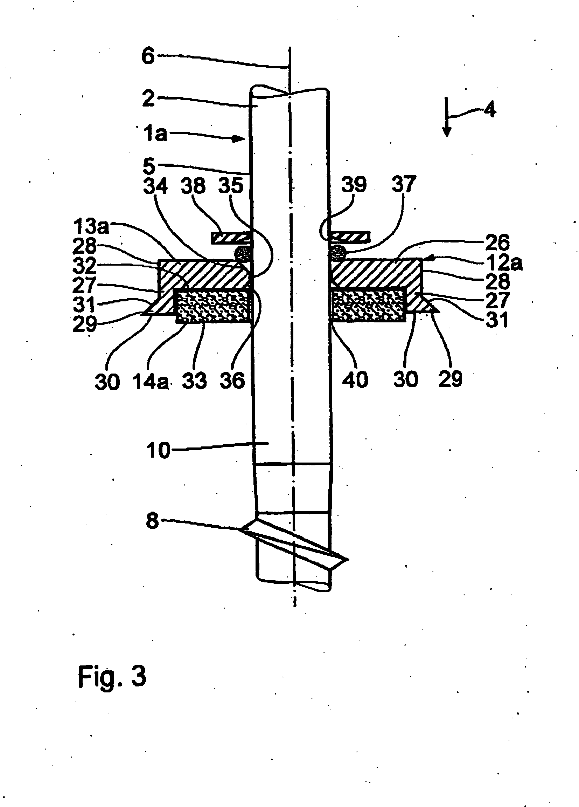

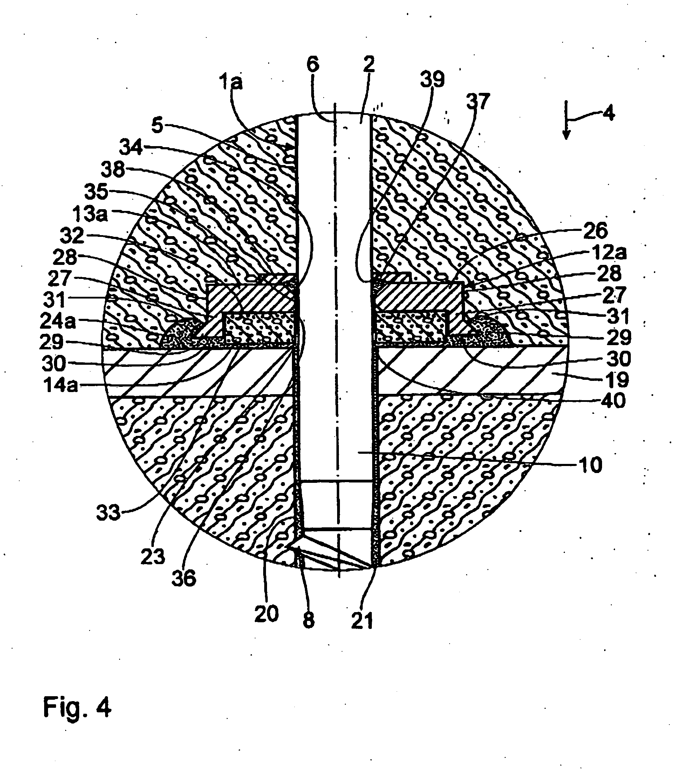

Im Folgenden wird unter Bezugnahme auf die Fig. 3 und 4 ein zweites Ausführungsbeispiel der Erfindung beschrieben. Identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Zunächst wird unter Bezugnahme auf Fig. 3 der Befestigungs-Anker 1a in unverbautem Zustand beschrieben. Die Stütz-Scheibe 13a ist in Form einer Kappe mit einer ringzylindrischen Scheibe 26 mit einem von dieser im Randbereich in Einschraub-Längsrichtung 4 vorstehenden Ringsteg 27 ausgebildet. Der Ringsteg 27 weist einen gegenüber dem radial äußeren Rand 28 der Scheibe 26 in radialer Richtung vorspringenden Sockel 29 auf. Der Sockel 29 läuft nach außen spitz aus und umgibt den Rand 28 ringförmig. Der Sockel 29 wird begrenzt durch eine senkrecht zur Achse 6 verlaufenden Bodenfläche 30 sowie eine mit dieser einen spitzen Winkel einschließenden Flanken-Fläche 31. Die Stütz-Scheibe 13a begrenzt durch die Scheibe 26 und den Ringsteg 27 in zwei Richtungen einen Aufnahme-Raum 32, in dem die ringzylindrische Dicht-Scheibe 14a aufgenommen ist. Die Dicht-Scheibe 14a liegt an den Begrenzungsflächen des Aufnahme-Raumes 32 an. Die Dicht-Scheibe 14a steht in Einschraub-Längsrichtung 4 gegenüber der Bodenfläche 30 der Stütz-Scheibe 13a hervor. Die Unterseite 33 der Dicht-Scheibe 14a verläuft senkrecht zur Achse 6.

Die Stütz-Scheibe 13a weist in dem dem Kern 2 zugewandten Bereich in Längsrichtung 4 hintereinander eine Außen-Fase 34, einen zylindrischen Anlage-Abschnitt 35 sowie eine Innen-Fase 36 auf. Die Außen-Fase 34 ist größer als die Innen-Fase 36. Der Anlage-Abschnitt 35 liegt mit möglichst geringem Spiel mit Reibsitz an dem Außenumfang 5 des Kernes 2 an. Durch die beiden Fasen 34 und 36 ist es möglich, die Abdichtungs-Scheibe 12a gegenüber dem Kern in beide Richtungen zu verkippen. Die Dicht-Scheibe 14a hindert ein Verkippen nicht, da sie elastisch ist. Durch die Verkippbarkeit der Abdichtungs-Scheibe 12a ist es möglich, den Befestigungs-Anker 1a auch zu verwenden, wenn das Bohrloch 20 nicht senkrecht zur Oberfläche des Bohrlochs gebohrt wurde. Die Abdichtungs-Scheibe 12a legt sich in diesem Fall flächig auf die Isolierschicht 19.

Unmittelbar oberhalb der Außen-Fase 34 und zum Teil in dieser aufgenommen ist eine aus einer dauerelastischen Abdichtmasse bestehende Ringwulst 37 vorgesehen, die an dem Kern 2 anliegt Vorteilhaft ist die Verwendung von Abdichtmassen, die an dem metallischen Kern 2 kleben und bei einer Verschiebung des Kerns 2 relativ zur Ringwulst 37 vom Kern 2 zum Teil mitgenommen werden. Oberhalb der Ringwulst 37 ist eine ringförmige, auf den Kern 2 mit Reibsitz sitzende Abdeck-Scheibe 38 angeordnet, die auf der Unterseite eine Fase 39 besitzt, in der die Ringwulst 37 zum Teil aufgenommen ist. Es ist auch möglich, auf die Abdeck-Scheibe 38 zu verzichten. Dies gilt grundsätzlich auch für die Ringwulst 37 selbst.

Die Abdichtungs-Scheibe 12a kann mit mehr oder weniger strammem Reibsitz auf dem Kern 2 sitzen. Da die Abdichtungs-Scheibe 12a bei typischen Verwendungen des Befestigungs-Ankers 1a durch die Schwerkraft nach unten gedrückt wird, ist selbst ein relativ loser Sitz auf dem Kern 2 möglich. Gegebenenfalls muss bei einem losen Sitz oder bei einem Sitz mit Spiel die Abdichtung zwischen dem Kern und der Abdichtungs-Scheibe durch eine Abdichtmasse sichergestellt werden. Dies gilt für das erste wie für das zweite Ausführungsbeispiel.

Im Folgenden wird unter Bezugnahme auf Fig. 4 das Einbringen des Befestigungs-Ankers 1a in das Bohrloch 20 beschrieben. Die Abdichtungs-Scheibe 12a sitzt bei dem Befestigungs-Anker 1a im unverbauten Zustand so nah am Ende des Gewindes 8, so dass beim Einschrauben des Ankers 1a die Abdichtungs-Scheibe 12a auf der Isolier-Schicht 19 zu liegen kommt und der Kern 2 durch die Abdichtungs-Scheibe 12a in das Bohrloch 20 eingeschraubt wird. Beim Einschrauben wird, wie beim ersten Ausführungsbeispiel beschrieben, die Verbundwasse 21 über den Bohrloch-Rand 23 durch den Spalt zwischen der Isolier-Schicht 19 und der Dicht-Scheibe 14a in radialer Richtung nach außen gedrückt. Die Menge der im Bohrloch 20 befindlichen Verbundmasse 21 ist so gewählt, dass die Verbundmasse in radialer Richtung das äußere Ende des Sockels 29 erreicht und diesen als Wulst 24a von oben umschließt. Die Wulst 24a befindet sich somit nicht nur im Bereich der Boden-Fläche 30, sondern auch auf der Flanken-Fläche 31, wo die Verbundmasse 21 aushärtet. Ein Eindringen von Feuchtigkeit von außen im Bereich des Sockels 29 ist somit ausgeschlossen. Durch das Durchschieben des Kerns 2 beim Einschrauben wird ein Teil der Abdichtmasse der Ringwulst 37 mitgenommen und versiegelt den Ringsalt 40 zwischen dem Anlage-Abschnitt 35 und der Dicht-Scheibe 14a einerseits und dem Außen-Umfang 5 des Kernes 2 andererseits. Ein Eindringen von Feuchtigkeit an der Oberfläche des Kernes 2 ist somit ebenfalls ausgeschlossen. Nach dem Ende des Einschraubens wird, wenn erforderlich, die Abdeck-Scheibe 38 auf die Stütz-Scheibe 13a aufgeschoben, wie dies in Fig. 4 dargestellt ist. Es kann somit beispielsweise durch den Beton des Ortbetonteils 25 zu keiner Zerstörung der Ringwulst 37 kommen. Nach dem vollständigen Einschrauben des Beiestigungs-Ankers 1a und dem Aushärten der Verbundmasse 21 wird, wie beim ersten Ausführungsbeispiel, das Ortbetonteil 25 gegossen. Durch die zusätzlichen Maßnahmen des zweiten Ausführungsbeispiels wird die Abdichtung des Bohrloches 20 gegenüber Feuchtigkeit noch einmal verbessert.

Grundsätzlich ist es beim ersten und zweiten Ausführungsbeispiel nicht zwingend erforderlich, dass die Abdichtungs-Scheiben so nah am Ende des Gewindes angeordnet sind, dass der Kern beim vollständigen Einschrauben durch die Abdichtungs-Scheibe geschoben wird. Es ist auch möglich, nach dem vollständigen Einschrauben des Befestigungs-Ankers die Abdichtungs-Scheibe von oben auf den Bohrloch-Rand zu drücken. Das Einschrauben ist weniger komfortabel. Des Weiteren muss der Reibsitz zwischen Kern und Abdichtungs-Scheibe dann loser gewählt werden, damit die Abdichtungs-Scheibe auf dem Kern von Hand verschoben werden kann. Dies reduziert die Dichtigkeit zwischen Kern und Abdichtungs-Scheibe.

## Patentansprüche

1. Befestigungs-Anker zum Einschrauben in ein Bohrloch (20) in einen harten, porösen Werkstoff, insbesondere Beton (15), umfassend.
a. einen zylindrischen Kern (2) mit einem Einführende (3), einer Einschraub-Längsrichtung (4) und einer dazu parallelen Mittel-Längs-Achse(6),
b. ein einstückig mit dem Kern (2) ausgebildetes, sich vom Einführende (3) entlang eines Gewinde-Abschnitts (A_{G}) erstreckendes Gewinde (8), welches entlang eines Schneid-Abschnitts (A_{S}) selbstschneidend ist.
c. ein am Kern (2) drehgesichert befestigtes, gegenüber dem Kern (2) radial vorspringendes Halteelement (11),
**dadurch gekennzeichnet, dass**
d. eine auf dem Kern (2) mit Reibsitz angeordnete, verschiebbare Abdichtungs-Scheibe (12; 12a) zur Abdichtung des Bohrlochs (20) vorgesehen ist, derart, dass sie zwischen dem Halte-Element (11) und dem dem Einführende (3) abgewandten Ende des Gewinde-Abschnitts (A_{G}) angeordnet ist,
e. wobei das Halte-Element (11) entgegen der Einschraub-Längsrichtung (4) hinter der Abdichtungs-Scheibe (12; 12a) angeordnet ist.

2. Befestigungs-Anker gemäß Anspruch 1, **dadurch gekennzeichnet, dass** die Abdichtungs-Scheibe (12; 12a) eine dem Einführende (3) abgewandte Stütz-Scheibe (13; 13a) und eine parallel zu dieser angeordnete, dem Einführende (3) zugewandte Dicht-Scheibe (14; 14a) aufweist.

3. Befestigungs-Anker gemäß Anspruch 2, **dadurch gekennzeichnet, dass** die Dicht-Scheibe (14; 14a) ein bituminöses Material aufweist.

4. Befestigungs-Anker gemäß einem der vorangegangenen Ansprüche, **dadurch gekennzeichnet, dass** dieser eine vom Einführende (3) gemessene Mindest-Einschraubtiefe E_{MIN} aufweist.

5. Befestigungs-Anker gemäß Anspruch 4, **dadurch gekennzeichnet, dass** die Abdichtungs-Scheibe (12; 12a) in einem Ausgangszustand vor dem Einschrauben einen Abstand A_{S} vom Einführende (3) aufweist, für den gilt: A_{S} < E_{MIN}.

6. Befestigungs-Anker gemäß einem der vorangehenden Ansprüche, **dadurch gekennzeichnet, dass** das Halte-Element (11) scheibenförmig ausgebildet ist.

7. Befestigungs-Anker gemäß Anspruch 2, **dadurch gekennzeichnet, dass** die Stütz-Scheibe (13a) die Dicht-Scheibe (14a) teilweise umschließt.

8. Befestigungs-Anker gemäß einem der vorangehende Ansprüche, **dadurch gekennzeichnet, dass** die Abdichtungs-Scheibe (12a) auf dem Kern (2) verkippbar ist.

9. Befestigungs-Anker gemäß Anspruch 1, **dadurch gekennzeichnet, dass** oberhalb der Abdichtungs-Scheibe (12a) eine den Kern umgebende Ringevulst (37) aus einer Abdichtmasse angeordnet ist.

10. Verfahren zur Befestigung eines Ortbetonteils (25) an einem Betonteil (15) umfassend die folgende Schritte:
a. Bohren eines einen Rand (23) aufweisenden Bohrloches (20) in ein Betonteil (15),
b. Einbringen einer selbstaushärtenden Verbundmasse (21) in das Bohrloch (20),
c. Einschrauben des Befestigungs-Ankers (1; 1a) gemäß einem der Ansprüche 1 bis 9 in das Bohrloch (20), wobei die Verbundmasse (21) über den Rand (23) des Bohrlochs (20) nach außen gedrückt wird und die Abdichtungs-Scheibe (12; 12a) zumindest während eines Teils des Einschraubens durch den Rand (23) des Bohrlochs (20) entgegen der Einschraub-Längsrichtung (4) auf dem Kern (2) verschoben wird und auf dem Rand (23) des Bohrloches (20), mit der Verbundmasse (21) verklebt, dicht zu liegen kommt,
d. Gießen eines Ortbetonteils (25) auf das Betonteil (15), sodass das Ortbetonteil (25) mindestens das Halte-Element (11) des Befestigungs-Ankers (1; 1a) umschließt, und
e. Aushärten des Ortbetonteils (25).

11. Verfahren gemäß Anspruch 10, **dadurch gekennzeichnet, dass** vor dem Einbringen der Verbundmasse (21) eine Isolier-Schicht (19) auf dem Betonteil (15) aufgebracht wird beziehungsweise sich dort bereits befindet.

12. Verfahren gemäß Anspruch 11, **dadurch gekennzeichnet, dass** die Isolier-Schicht (19) elastisch ist, insbesondere Bitumen enthaltend ist.

13. Verfahren gemäß Anspruch 12, **dadurch gekennzeichnet, dass** die Verbundmasse (21) derart ausgewählt ist, dass sie sich während des Aushärtens erwähnt.

14. Verfahren gemäß Anspruch 13, **dadurch gekennzeichnet, dass** die Verbundmasse (21) die Abdichtungs-Scheibe (12; 12a) und die Isolier-Schicht (19) beim Aushärten miteinander verschmilzt.

15. Verfahren gemäß Anspruch 10, **dadurch gekennzeichnet, dass** sich die Abdichtungs-Scheibe (12; 12a) vor dem Einschrauben näher am Einführende (3) befindet als nach dem vollständigen Einschrauben des Befestigungs-Ankers (1).

## Claims

1. Fastening anchor which is screwable into a drill hole (20) in a hard porous material, in particular concrete (15), comprising
a. a cylindrical core (2) comprising an insert end (3), a longitudinal direction of screwing (4), and a central longitudinal axis (6) parallel thereto;
b. a thread (8) which is formed in one piece with the core (2) and extends from the insert end (3) along a thread portion (A_{G}), the thread (8) being self-cutting along a cutting portion (A_{S}),
c. a retaining element (11) which is non-rotatably secured to the core (2) and which protrudes radially with respect to the core (2),
**characterized in that**
d. a displaceable disc seal (12; 12a), which is in a frictional connection with the core (2), is provided for sealing the drill hole (20) in such a way as to be arranged between the retaining element (11) and the end of the thread portion (A_{G}) remote from the insert end (3),
e. wherein the retaining element (11) is arranged behind the disc seal (12; 12a) in a direction opposite to the longitudinal direction of screwing (4).

2. Fastening anchor according to claim 1, **characterized in that** the disc seal (12; 12a) has a support disc (13; 13a) remote from the insert end (3) and a sealing disc (14; 14a) which is parallel to the support disc (13; 13a) and faces the insert end (3).

3. Fastening anchor according to claim 2, **characterized in that** the sealing disc (14; 14a) comprises a bituminous material.

4. Fastening anchor according to one of the preceding claims, **characterized in that** the fastening anchor has a minimum screwing depth E_{MIN} which is measured from the insert end (3).

5. Fastening anchor according to claim 4, **characterized in that** in an initial state before screwing in, the disc seal (12; 12a) has a distance As from the insert end (3) with As < E_{MIN}.

6. Fastening anchor according to one of the preceding claims, **characterized in that** the retaining element (11) is disc-shaped.

7. Fastening anchor according to claim 2, **characterized in that** the support disc (13a) partially encloses the sealing disc (14a) .

8. Fastening anchor according to one of the preceding claims, **characterized in that** the disc seal (12a) is tiltable on the core (2).

9. Fastening anchor according to claim 1, **characterized in that** above the disc seal (12a) is arranged an annular bead (37) of a sealing mass which surrounds the core.

10. Method for fastening an in-situ concrete part (25) to a concrete part (15), comprising the following steps:
a. drilling a hole (20) into a concrete part (15), the hole (20) having an edge (23);
b. filling a self-curing compound mass (21) into the drill hole (20);
c. screwing the fastening anchor (1; 1 a) according to one of claims 1 to 9 into the drill hole (20), which causes the compound mass (21) to be pressed outwardly beyond the edge (23) of the drill hole (20) while the disc seal (12; 12a) is displaced on the core (2) opposite to the longitudinal screwing direction (4) through the edge (23) of the drill hole (20) at least during a part of the screwing process, which brings the disc seal (12; 12a), sticking to the compound mass (21), in tight contact with the edge (23) of the drill hole (20),
d. casting an in-situ concrete part (25) on the concrete part (15) in such a way that the in-situ concrete part (25) encloses at least the retaining element (11) of the fastening anchor (1; 1a).
e. curing of the in-situ concrete part (25).

11. Method according to claim 10, **characterized in that** prior to filling in the compound mass (21), an insulating layer (19) is applied to the concrete part (15) or has already been applied thereto.

12. Method according to claim 11, **characterized in that** the insulating layer (19) is resilient and in particular contains bitumen.

13. Method according to claim 12, **characterized in that** the compound mass (21) is selected in such a way that it heats up during curing.

14. Method according to claim 13, **characterized in that** when curing, the compound mass (21) causes the disc seal (12; 12a) to fuse with the insulating layer (19).

15. Method according to claim 10, **characterized in that** before screwing in, the disc seal (12; 12a) is closer to the insert end (3) than after the fastening anchor (1) has been completely screwed in.

## Revendications

1. Ancre de fixation pour le vissage dans un trou de perçage (20) dans un matériau dur et poreux, en particulier du béton (15), comprenant
a. un noyau cylindrique (2) avec une extrémité d'introduction (3), une direction longitudinale de vissage (4) et un axe longitudinal médian (6) parallèle à la première,
b. un filetage (8) conçu d'une seule pièce avec le noyau (2), s'étendant de l'extrémité d'introduction (3) le long d'une partie de filetage (A_{G}), qui est autotaraudeur le long d'une partie de coupe (A_{S}),
c. un élément de retenue (11) fixé sur le noyau (2) de façon bloquée en rotation et avançant radialement par rapport au noyau (2),
**caractérisée en ce que**
d. une rondelle d'étanchéité (12; 12a) coulissante et disposée sur le noyau (2) avec le siège de frottement est prévue pour l'étanchéité du trou de perçage (20) de telle sorte qu'elle est disposée entre l'élément de retenue (11) et l'extrémité, opposée à l'extrémité d'introduction (3), de la partie de filetage (A_{G}),
e. l'élément de retenue (11) étant disposé dans le sens contraire à la direction longitudinale de vissage (4) derrière la rondelle d'étanchéité (12; 12a).

2. Ancre de fixation selon la revendication 1, **caractérisée en ce que** la rondelle d'étanchéité (12 ; 12a) présente une rondelle de soutien (13 ; 13a) opposée à l'extrémité d'introduction (3) et une rondelle d'étanchéité (14 ; 14a) disposée parallèlement à la première rondelle et tournée vers l'extrémité d'introduction (3).

3. Ancre de fixation selon la revendication 2, **caractérisée en ce que** la rondelle d'étanchéité (14 ; 14a) présente un matériau bitumineux.

4. Ancre de fixation selon l'une quelconque des revendications précédentes, **caractérisée en ce que** cette ancre présente une profondeur de vissage minimale E_{MIN} mesurée à partir de l'extrémité d'introduction (3).

5. Ancre de fixation selon la revendication 4, **caractérisée en ce que** la rondelle d'étanchéité (12 ; 12a) présente dans un état de départ avant le vissage une distance A_{S} à l'extrémité d'introduction (3) pour laquelle on a : A_{S} < E_{MIN}.

6. Ancre de fixation selon l'une quelconque des revendications précédentes, **caractérisée en ce que** l'élément de retenue (11) est conçu en forme de disque.

7. Ancre de fixation selon la revendication 2, **caractérisée en ce que** la rondelle de soutien (13a) entoure partiellement la rondelle d'étanchéité (14a).

8. Ancre de fixation selon l'une quelconque des revendications précédentes, **caractérisée en ce que** la rondelle d'étanchéité (12a) peut basculer sur le noyau (2).

9. Ancre de fixation selon la revendication 1, **caractérisée en ce qu'**un renflement annulaire (37) entourant le noyau, à base d'une masse d'étanchéité, est disposé au-dessus de la rondelle d'étanchéité (12a).

10. Procédé pour la fixation d'une partie en béton coulé sur place (25) sur une partie en béton (15) comprenant les étapes suivantes:
a. perçage d'un trou de perçage (20) présentant un bord (23) dans une partie en béton (15),
b. introduction d'une masse composite (21) autodurcissante dans le trou de perçage (20),
c. vissage de l'ancre de fixation (1 ; 1a) selon l'une quelconque des revendications 1 à 9 dans le trou de perçage (20), la masse composite (21) étant appuyée par le bord (23) du trou de perçage (20) vers l'extérieur et la rondelle d'étanchéité (12 ; 12a) étant déplacée au moins pendant une partie du vissage par le bord (23) du trou de perçage (20) dans le sens contraire à la direction longitudinale de vissage (4) sur le noyau (2) et arrivant très près sur le bord (23) du trou de perçage (20), collée avec la masse composite (21),
d. coulée d'une partie en béton coulé sur place (25) sur la partie en béton (15), de sorte que la partie en béton coulé sur place (25) entoure au moins l'élément de retenue (11) de l'ancre de fixation (1 ; 1a) et
e. durcissement de la partie en béton coulé sur place (25).

11. Procédé selon la revendication 10, **caractérisé en ce qu'**une couche isolante (19) est appliquée sur la partie en béton (15) avant l'introduction de la masse composite (21) ou se trouve déjà à cet endroit.

12. Procédé selon la revendication 11, **caractérisé en ce que** la couche isolante (19) est élastique, en particulier contient du bitume.

13. Procédé selon la revendication 12, **caractérisé en ce que** la masse composite (21) est choisie de telle sorte qu'elle se réchauffe pendant le durcissement.

14. Procédé selon la revendication 13, **caractérisé en ce que** la masse composite (21) fait fondre la rondelle d'étanchéité (12 ; 12a) et la couche isolante (19) lors du durcissement l'une avec l'autre.

15. Procédé selon la revendication 10, **caractérisé en ce que** la rondelle d'étanchéité (12 ; 12a) se trouve avant le vissage plus près de l'extrémité d'introduction (3) qu'après le vissage complet de l'ancre de fixation (1).
